# EUROPEAN PATENT APPLICATION

(11) **EP 4 779 272 A2**
(43) Date of publication of application: **22.07.2026**
(21) Application number: 26151426.9
(22) Date of filing: 12.01.2026
(51) Int. Cl.: G01G 19/393

(54) **DISPERSION APPARATUS AND COMBINATION WEIGHING APPARATUS INCLUDING THE SAME**

(30) Priority: 20.01.2025 JP 2025007653
(71) Applicant: Ishida Co., Ltd., Kyoto-shi Kyoto 606-8392 (JP)
(72) Inventor: HAYAKAWA, Shusaku, Ritto-shi, Shiga, 520-3026 (JP); AKIGUCHI, Shogo, Ritto-shi, Shiga, 520-3026 (JP)
(74) Representative: Gill Jennings & Every LLP

(57) **Abstract**

To provide a dispersion apparatus that facilitates cleaning of a dispersion table, multiple radial feeders, and a cover that covers their drive units. A dispersion apparatus 10 includes a dispersion table 20, a plurality of radial feeders 30, and a cover 35a. The dispersion table 20 disperses to the surrounding area goods supplied from outside. The radial feeders 30 are radially disposed around the dispersion table 20 and further convey in the radial direction the goods G fed thereto from the dispersion table 20. The cover 35a is positioned under the dispersion table 20 and covers a plurality of first drive units 36 that vibrate the dispersion table 20 and a plurality of second drive units 37 that vibrate each of the plurality of radial feeders 30. An introduction path 25 through which a nozzle 200 that sprays a cleaning liquid can pass is formed in the dispersion table 20.

## Description

### TECHNICAL FIELD

This invention relates to a dispersion apparatus that conveys, while dispersing, goods supplied from outside.

### BACKGROUND ART

In dispersion apparatus for combination weighing apparatus, powder and residue from weighing objects accumulate on a dispersion table, multiple radial feeders, and a cover that covers their drive units. Therefore, when switching between different weighing objects or after production ends, it is necessary to clean the dispersion table, the radial feeders, and the cover. For example, patent document 1 (JP-A No. 2011-27438) discloses a dispersion apparatus for a combination weighing apparatus in which a cleaning nozzle is brought close to and cleans the dispersion table and the radial feeders.

### SUMMARY OF THE INVENTION

### TECHNICAL PROBLEM

In the above apparatus, the dispersion table and the radial feeders can be cleaned without detaching them, but conversely they obstruct the path of the cleaning liquid sprayed from the cleaning nozzle, so that the radial feeders and a cover positioned under the radial feeders are unable to be sufficiently cleaned.

Therefore, there is a desired a dispersion apparatus that facilitates cleaning of a dispersion table, multiple radial feeders, and a cover that covers their drive units.

### SOLUTION TO PROBLEM

A dispersion apparatus pertaining to a first aspect includes a dispersion table, a plurality of radial feeders, and a cover. The dispersion table disperses to the surrounding area goods supplied from outside. The radial feeders are radially disposed around the dispersion table and further convey in the radial direction the goods fed thereto from the dispersion table. The cover is positioned under the dispersion table and covers drive units of each of the dispersion table and the plurality of radial feeders. An introduction path through which a nozzle that sprays a cleaning material can pass is formed in the dispersion table.

In this dispersion apparatus, the introduction path through which the cleaning nozzle can pass is formed in the dispersion table, so areas that the nozzle previously could not be brought close to can be cleaned.

A dispersion apparatus pertaining to a second aspect is the dispersion apparatus pertaining to the first aspect, wherein the introduction path is configured so that the nozzle can pass through it from above the dispersion table to below the dispersion table.

In this dispersion apparatus, the nozzle passes through the dispersion table, so regions that the nozzle could not get close to, such as the undersurface of the dispersion table and the cover located under the dispersion table, can be cleaned.

A dispersion apparatus pertaining to a third aspect is the dispersion apparatus pertaining to the first aspect or the second aspect, wherein the introduction path is formed radially from a center portion of the dispersion table.

In this dispersion apparatus, not only does it become possible for the nozzle to pass through the center of the dispersion table while cleaning, it also becomes possible for it to move in the radial direction.

A dispersion apparatus pertaining to a fourth aspect is the dispersion apparatus pertaining to the third aspect, wherein the width of the introduction path becomes wider from the center portion to a peripheral edge portion of the dispersion table.

A dispersion apparatus pertaining to a fifth aspect is the dispersion apparatus pertaining to any one of the first aspect to the fourth aspect, wherein the dispersion table is divided by the introduction path into a plurality of regions.

In this dispersion apparatus, the introduction path can be utilized as boundaries when the dispersion table is divided into a plurality.

A dispersion apparatus pertaining to a sixth aspect is the dispersion apparatus pertaining to the fifth aspect, wherein the plurality of regions are not in contact with each other.

In this dispersion apparatus, the regions become independently driven in order for each of the plural regions to disperse the goods, so it is ideal for them not to be in contact with each other.

A dispersion apparatus pertaining to a seventh aspect is the dispersion apparatus pertaining to any one of the first aspect to the sixth aspect, wherein the nozzle is movably provided.

A combination weighing apparatus pertaining to an eighth aspect includes the dispersion apparatus pertaining to any one of the first aspect to the sixth aspect, a plurality of hoppers, a plurality of weighing units, and a control unit. The hoppers temporarily retain and then discharge the goods input from the radial feeders. The weighing units acquire as weigh values the masses of the goods retained in each of the plurality of hoppers. The control unit, based on the weigh values acquired by each of the plurality of weighing units, selects a combination whose total value results in a target value and causes the goods to be discharged from the hoppers corresponding to the combination.

A combination weighing apparatus pertaining to a ninth aspect includes the dispersion apparatus pertaining to the seventh aspect, a plurality of hoppers, a plurality of weighing units, and a control unit. The hoppers temporarily retain and then discharge the goods input from the radial feeders. The weighing units acquire as weigh values the masses of the goods retained in each of the plurality of hoppers. The control unit, based on the weigh values acquired by each of the plurality of weighing units, selects a combination whose total value results in a target value and causes the goods to be discharged from the hoppers corresponding to the combination.

### ADVANTAGEOUS EFFECTS OF INVENTION

In the dispersion apparatus pertaining to this invention, the introduction path through which the cleaning nozzle can pass is formed in the dispersion table, so areas that the nozzle previously could not be brought close to can be cleaned.

### BRIEF DESCRIPTION OF THE DRAWINGS

FIG. 1 is a drawing showing the schematic configuration of a combination weighing apparatus pertaining to an embodiment of this invention;
FIG. 2 is a perspective view of a dispersion apparatus;
FIG. 3 is a perspective view of a first dispersion table;
FIG. 4 is a perspective view of the first dispersion table as viewed from a long wall side;
FIG. 5 is a perspective view of a dispersion table;
FIG. 6 is a plan view of the dispersion table;
FIG. 7A is a schematic cross-sectional view of the dispersion apparatus;
FIG. 7B is a schematic cross-sectional view of the dispersion apparatus in which just a cover shown in FIG. 7A is changed;
FIG. 8 is a side view of the upper portion of a combination weighing apparatus;
FIG. 9 is a schematic perspective view of a support that movably supports a nozzle;
FIG. 10 is a plan view of the dispersion table in which the moving path of the nozzle is indicated by dashed-line arrows;
FIG. 11A is a plan view of a dispersion table in which an introduction path pertaining to another example is formed; and
FIG. 11B is a side view of the dispersion table shown in FIG. 11A.

### DETAILED DESCRIPTION

### (1) Overview of Combination Weighing Apparatus 100

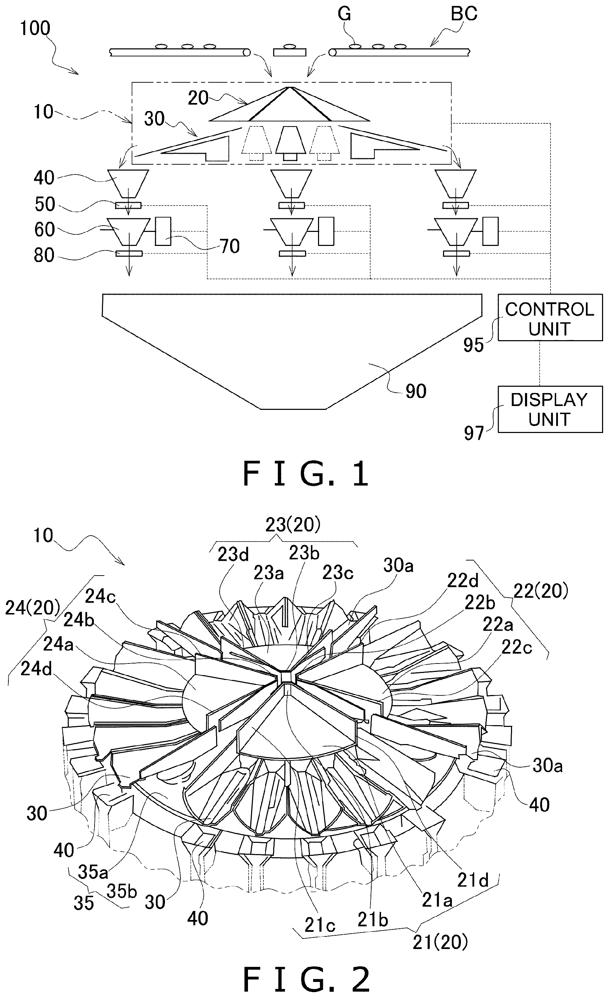

FIG. 1 is a drawing showing the schematic configuration of a combination weighing apparatus 100 pertaining to an embodiment of this invention. Turning now to FIG. 1, the combination weighing apparatus 100 includes a dispersion apparatus 10, a plurality of pool hoppers 40, a plurality of gates 50, a plurality of weigh hoppers 60, a plurality of weight detectors 70, a plurality of discharge gates 80, a collection chute 90, a control unit 95, and a display unit 97.

The dispersion apparatus 10 includes at least a dispersion table 20 and a plurality of radial feeders 30. The dispersion table 20 is conical and positioned in the central upper portion of the combination weighing apparatus 100. The plurality of radial feeders 30 are radially disposed around the dispersion table 20. The dispersion apparatus 10 will be described in detail in the next section.

Downstream of the dispersion apparatus 10 are disposed the pool hoppers 40, the gates 50, the weigh hoppers 60, the weight detectors 70, and the discharge gates 80. As shown in FIG. 1, goods G are supplied by belt conveyors BC to the dispersion table 20.

The radial feeders 30 drop the goods that have moved thereto from the dispersion table 20 to the pool hoppers 40 provided downstream. The goods G are temporarily retained in the pool hoppers 40.

The lower portions of each of the pool hoppers 40 are opened and closed by the gates 50. When the gates 50 are closed, the pool hoppers 40 hold the goods G, and when the gates 50 are opened, the pool hoppers 40 drop the goods G.

The weigh hoppers 60 are positioned downstream of each of the gates 50 and hold the goods G input from the pool hoppers 40. The weight detectors 70 are attached to each of the weigh hoppers 60 and detect the weights of the goods G held in the weigh hoppers 60. Based on the detected weights, a combination operation is performed to determine which of the weigh hoppers 60 to discharge the goods G from to achieve a weight or numerical quantity within an acceptable range.

The lower portions of each of the weigh hoppers 60 are opened and closed by the discharge gates 80. When the discharge gates 80 are closed, the weigh hoppers 60 hold the goods G, and when the discharge gates 80 are opened, the weigh hoppers 60 drop the goods G. Based on the results of the combination operation, the discharge gates 80 corresponding to several of the weigh hoppers 60 are opened to discharge the goods to the collection chute 90.

The collection chute 90 is funnel-shaped, receives in its upper opening the goods G discharged from all the discharge gates 80, collects the goods G, and supplies them downward. Typically a packaging machine (not shown in the drawings) is positioned under the collection chute 90.

The control unit 95 controls the operation of the dispersion apparatus 10 and the opening and closing operations of the gates 50 and the discharge gates 80. Furthermore, based on weigh values acquired by each of the plurality of weight detectors 70, the control unit 95 selects a combination whose total value results in a target value and causes the goods G to be discharged from the weigh hoppers 60 corresponding to that combination.

Furthermore, the display unit 97 is connected to the control unit 95. The display unit 97 functions as an input device to the control unit 95, and an operator can input necessary information via the display unit 97.

### (2) Detailed Structure of Dispersion Apparatus 10

FIG. 2 is a perspective view of the dispersion apparatus 10. Turning now to FIG. 2, the dispersion apparatus 10 includes the dispersion table 20, the plurality of radial feeders 30, and a casing 35 that houses their drive units.

### (2-1) Dispersion Table 20

The dispersion table 20 includes four fan-shaped tables that are disposed so as to form a cone. The tables will be called a first dispersion table 21, a second dispersion table 22, a third dispersion table 23, and a fourth dispersion table 24.

As shown in FIG. 1, belt conveyors BC corresponding to each of the tables 21 to 24 are disposed above the dispersion apparatus 10, and the goods G are supplied to each of the first dispersion table 21, the second dispersion table 22, the third dispersion table 23, and the fourth dispersion table 24.

Since the first dispersion table 21, the second dispersion table 22, the third dispersion table 23, and the fourth dispersion table 24 have the same shape, just the first dispersion table 21 will be described here, and description of the second dispersion table 22, the third dispersion table 23, and the fourth dispersion table 24 will be omitted.

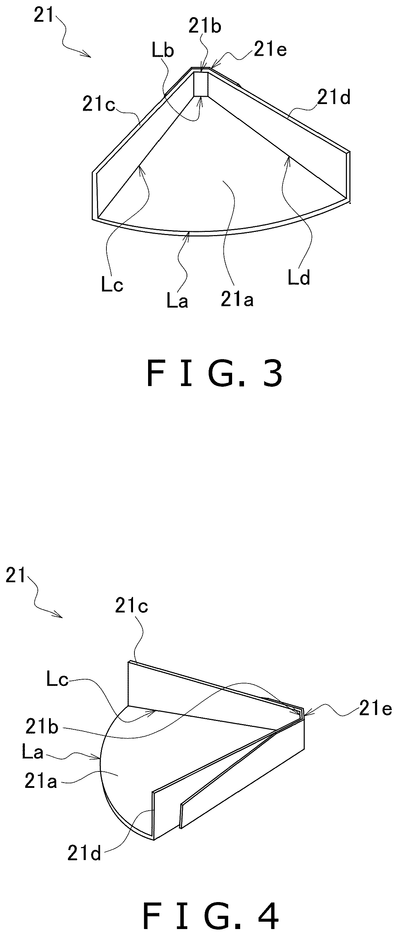

FIG. 3 is a perspective view of the first dispersion table 21. Turning now to FIG. 3, the dispersion table 21 has a fan-shaped table surface 21a. The table surface 21a includes an arc La and two long sides Lc, Ld that sandwich the arc La.

Furthermore, the two long sides Lc, Ld are cut before they intersect at the vertex of the arc, and the cut ends are interconnected by one short side Lb. Consequently, the table surface 21a is defined by the arc La, the short side Lb, and the two long sides Lc, Ld.

The first dispersion table 21 further has a short wall 21b that rises from the short side Lb as a boundary and long walls 21c, 21d that rise from the long sides Lc, Ld as boundaries.

FIG. 4 is a perspective view of the first dispersion table 21 as viewed from the long wall 21d side. Turning now to FIG. 3 and FIG. 4, the first dispersion table 21 includes a reinforcement plate 21e that is joined to and reinforces the short wall 21b and the long walls 21c, 21d.

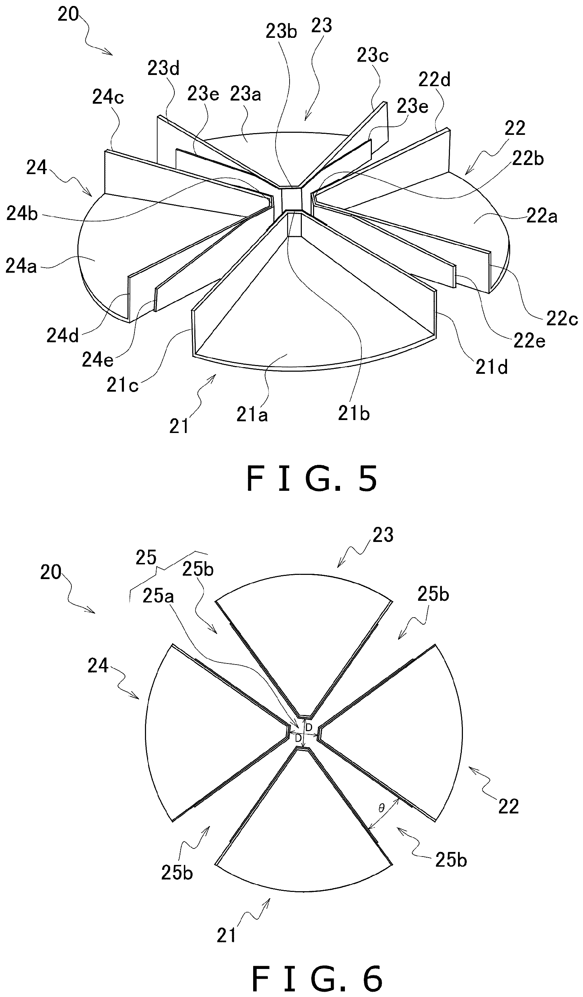

FIG. 5 is a perspective view of the dispersion table 20. Turning now to FIG. 5, like the first dispersion table 21, the second dispersion table 22 has a table surface 22a, a short wall 22b, long walls 22c, 22d, and a reinforcement plate 22e. The third dispersion table 23 has a table surface 23a, a short wall 23b, long walls 23c, 23d, and a reinforcement plate 23e. The fourth dispersion table 24 has a table surface 24a, a short wall 24b, long walls 24c, 24d, and a reinforcement plate 24e.

FIG. 6 is a plan view of the dispersion table 20. Turning now to FIG. 5 and FIG. 6, the first dispersion table 21 and the third dispersion table 23 are disposed so that the reinforcement plates 21e, 23e on the short wall 21b, 23b sides oppose each other across a distance D.

Furthermore, the second dispersion table 22 and the fourth dispersion table 24 are disposed so that the reinforcement plates 22e, 24e on the short wall 22b, 24b sides oppose each other across a distance D. Because of this, a space 25a that vertically penetrates the center portion of the dispersion table 20 is formed. However, the space 25a may also be away from the center portion of the dispersion table 20.

Furthermore, the first dispersion table 21, the second dispersion table 22, the third dispersion table 23, and the fourth dispersion table 24 are disposed so that spaces 25b are formed between mutually adjacent dispersion tables in the circumferential direction.

The spaces 25b become wider from the gap in the center portion to the peripheral edge portion of the dispersion table 20 so as to form arcs θ. However, the spaces 25b may also be configured to have a constant width from the center portion to the peripheral edge portion of the dispersion table 20.

As described above, the dispersion table 20 has a configuration in which it is divided by the space 25a and the four spaces 25b into the first dispersion table 21, the second dispersion table 22, the third dispersion table 23, and the fourth dispersion table 24.

In this embodiment, the space 25a is utilized as an introduction path for a nozzle that sprays a cleaning material to pass through, so the space 25a, including the four spaces 25b connected to it, will be called an "introduction path 25." However, the introduction path 25 may also be just the space 25a or just the spaces 25b.

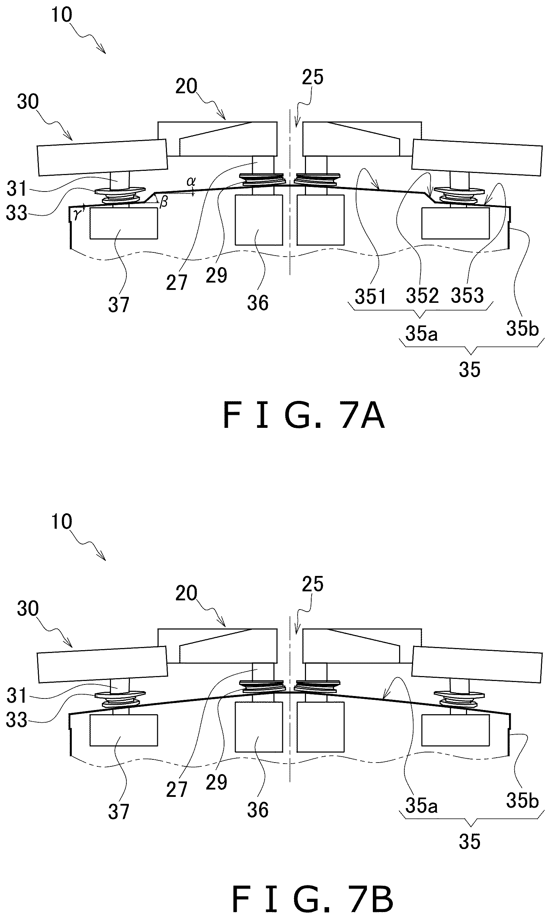

Under each of the first dispersion table 21, the second dispersion table 22, the third dispersion table 23, and the fourth dispersion table 24 are disposed drive units (see FIG. 7) that vibrate them.

### (2-2) Radial Feeders 30

As shown in FIG. 2, the plurality of radial feeders 30 are disposed around the dispersion table 20. In this embodiment, five radial feeders 30 correspond to each of the first dispersion table 21, the second dispersion table 22, the third dispersion table 23, and the fourth dispersion table 24.

The radial feeders 30 convey the goods G supplied from the dispersion table 20 to the pool hoppers 40. Under each of the plurality of radial feeders 30 are disposed drive units (see FIG. 7) that vibrate the radial feeders 30.

### (2-3) Casing 35

FIG. 7A is a schematic cross-sectional view of the dispersion apparatus 10. Furthermore, FIG. 7B is a schematic cross-sectional view of the dispersion apparatus 10 in which just a cover 35a shown in FIG. 7A is changed.

Turning now to FIG. 7A, the casing 35 is positioned under the dispersion table 20. The casing 35 includes a cover 35a that is circular in plan view and a cylindrical body portion 35b that extends downward from the peripheral edge of the cover 35a, and the cover 35a and the body portion 35b are integrally formed.

The cover 35a slopes downward from its center to its peripheral edge portion. In this embodiment, the cover 35a is configured by a first region 351 that surrounds the center, a second region 352 that surrounds the first region 351, and a third region 353 that surrounds the second region 352. The third region 353 is formed a step lower than the first region 351, and the second region 352 interconnects the first region 351 and the third region 353.

More specifically, the first region 351 slopes downward at an angle α relative to a horizontal plane, the second region 352 slopes downward at an angle β greater than the angle α relative to a horizontal plane, and the third region 353 slopes downward at an angle γ smaller than the angle α relative to a horizontal plane. However, the angle α and the angle γ may also be identical.

However, the cover 35a does not invariably need to be provided with a step as in FIG. 7A and may also gently slope downward from its center to its peripheral edge portion such as shown in FIG. 7B.

Inside the casing 35 are disposed a plurality of first drive units 36 that vibrate each of the tables 21 to 24 of the dispersion table 20 and a plurality of second drive units 37 that vibrate each of the plurality of radial feeders 30.

First vibration transmission mechanisms 27 that transmit the vibration of the first drive units 36 penetrate the first region 351 of the cover 35a and are connected to each of the tables 21 to 24 of the dispersion table 20. Gaps between the first region 351 of the cover 35a and the first vibration transmission mechanisms 27 are covered by first bellows 29, which are made of an elastic material.

Similarly, second vibration transmission mechanisms 31 that transmit the vibration of the second drive units 37 penetrate the third region 353 of the cover 35a and are connected to the radial feeders 30. Gaps between the third region 353 of the cover 35a and the second vibration transmission mechanisms 31 are covered by second bellows 33, which are made of an elastic material.

### (3) Cleaning Utilizing Introduction Path 25

In the dispersion apparatus 10, powder or residue accumulates on the dispersion table 20, the radial feeders 30, and the cover 35a. This tendency is particularly pronounced when conveying gummies with granulated sugar or sour flavorings, and it is necessary to clean those areas when switching between different products or after production ends.

In conventional types, in which a cleaning liquid is sprayed from the upper surface and the side surface of the dispersion apparatus 10, regions that are blind spots of the dispersion table 20 and the radial feeders 30, including the reverse side on the bottom of the dispersion table 20, the reverse sides of the radial feeders 30, and the surface of the cover 35a, have been unable to be cleaned.

In this embodiment, the space 25a of the introduction path 25 is utilized as a passage for a cleaning nozzle when cleaning the dispersion apparatus 10, so the problems with the conventional types are overcome.

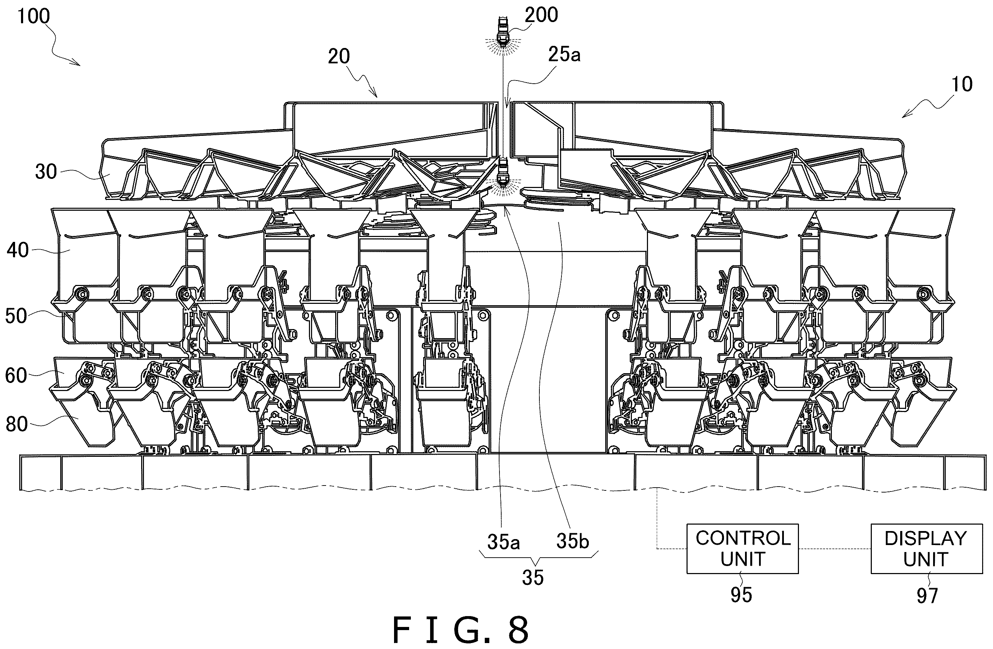

FIG. 8 is a side view of the upper portion of the combination weighing apparatus 100. Turning now to FIG. 8, a nozzle 200 that sprays a cleaning material is disposed above the dispersion table 20. In this embodiment, water is used as a cleaning liquid that is the cleaning material.

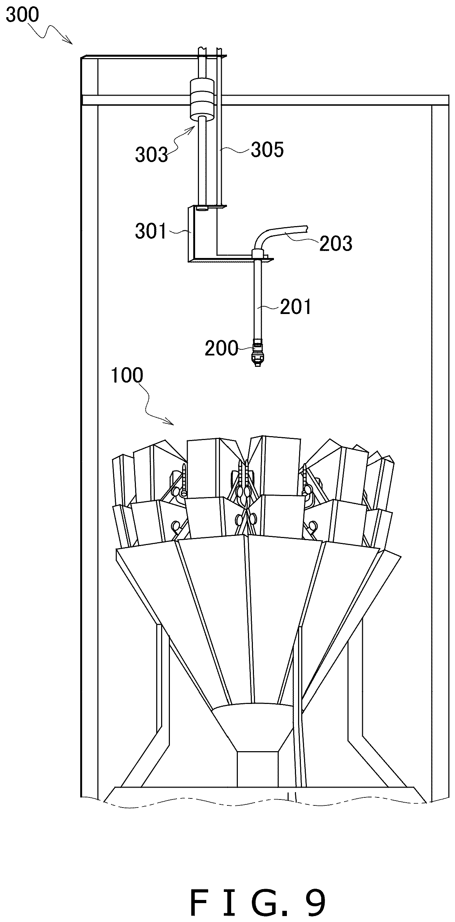

FIG. 9 is a schematic perspective view of a support 300 that movably supports the nozzle 200. Turning now to FIG. 9, the nozzle 200 is held in a holder 301 via a pipe 201. A hose 203 that supplies water to the pipe 201 is connected to the end portion of the pipe 201 on the holder 301 side.

The holder 301 is attached to the distal end of a ball screw mechanism 303 and is movable up and down. When the holder 301 moves up and down, it moves along a guide 305.

Furthermore, the support 300 is a structure separate from the combination weighing apparatus 100, and the nozzle 200 is operated by the operator to move and stop moving and to spray and stop spraying the cleaning liquid.

In this embodiment, as shown in FIG. 8, the nozzle 200 is positioned directly over the space 25a of the introduction path 25, descends while spraying the cleaning liquid, passes through the space 25a, and reaches directly above the cover 35a. The range that the cleaning liquid reaches extends to the reverse side on the bottom of the dispersion table 20, the reverse sides of the radial feeders 30, and the entire surface of the cover 35a. Consequently, areas that the nozzle 200 previously could not be brought close to can be cleaned.

Furthermore, since the casing 35 slopes from its center to its peripheral edge portion, it has the effect of allowing the cleaning liquid sprayed from the nozzle 200 to flow off more easily. Furthermore, the first bellows 29 and the second bellows 33 may be raised in order to allow the cleaning liquid to flow off even more easily.

### (4) Characteristics

(4-1)
The dispersion apparatus 10 includes the dispersion table 20, the plurality of radial feeders 30, and the cover 35a. The dispersion table 20 disperses to the surrounding area the goods G supplied from outside. The radial feeders 30 are radially disposed around the dispersion table 20 and further convey in the radial direction the goods G fed thereto from the dispersion table 20.

The cover 35a is positioned under the dispersion table 20 and covers the plurality of first drive units 36 that vibrate each of the tables 21 to 24 of the dispersion table 20 and the plurality of second drive units 37 that vibrate each of the plurality of radial feeders 30. The introduction path 25 through which the nozzle 200 that sprays the cleaning liquid can pass is formed in the dispersion table 20.

In this dispersion apparatus 10, the introduction path 25 through which the nozzle 200 can pass is formed in the dispersion table 20, so areas that the nozzle 200 previously could not be brought close to can be cleaned.
(4-2)
   The introduction path 25 is configured so that the nozzle 200 can pass through it from above the dispersion table 20 to below the dispersion table 20. In the dispersion apparatus 10, the nozzle 200 passes through the dispersion table 20, so regions that the nozzle 200 could not get close to, such as the undersurface of the dispersion table 20 and the cover 35a located under the dispersion table 20, can be cleaned.
(4-3)
   The introduction path 25 is formed radially from the center portion of the dispersion table 20, so not only does it become possible for the nozzle 200 to pass through the center of the dispersion table 20 while cleaning, it also becomes possible for it to move in the radial direction.
(4-4)
   The width of the introduction path 25 becomes wider from the center portion to the peripheral edge portion of the dispersion table 20.
(4-5)
   The introduction path 25 functions as boundaries between mutually adjacent tables of the first dispersion table 21, the second dispersion table 22, the third dispersion table 23, and the fourth dispersion table 24.
(4-6)
   In the dispersion apparatus 10, the first dispersion table 21, the second dispersion table 22, the third dispersion table 23, and the fourth dispersion table 24 are not in contact with each other. The tables 21 to 24 become independently driven in order for each of the tables 21 to 24 to disperse the goods G, so it is ideal for them not to be in contact with each other.

### (5) Example Modifications

### (5-1) Example Modification 1

In the above embodiment, the nozzle 200 is movably supported by the support 300 that is separate from the combination weighing apparatus 100, and the nozzle 200 is operated by the operator to move and stop moving and to spray and stop spraying the cleaning liquid.

However, the operation of the nozzle 200 may be configured to be a constituent element of the combination weighing apparatus 100 under the control of the control unit 95. For example, referring to FIG. 8, the nozzle 200 may be configured to that its moving amount, its moving speed, and the amount of cleaning liquid it sprays can be set by the operator via the display unit 97.

Furthermore, the support 300 may be connected to the body of the combination weighing apparatus 100 such as, for example, part of the dispersion apparatus 10.

### (5-2) Example Modification 2

In the above embodiment, the nozzle 200 just passes through the space 25a of the introduction path 25 from above the dispersion table 20 to below the dispersion table 20. However, the nozzle 200 may also move along the spaces 25b in the radial direction after passing from above the dispersion table 20 to below the dispersion table 20.

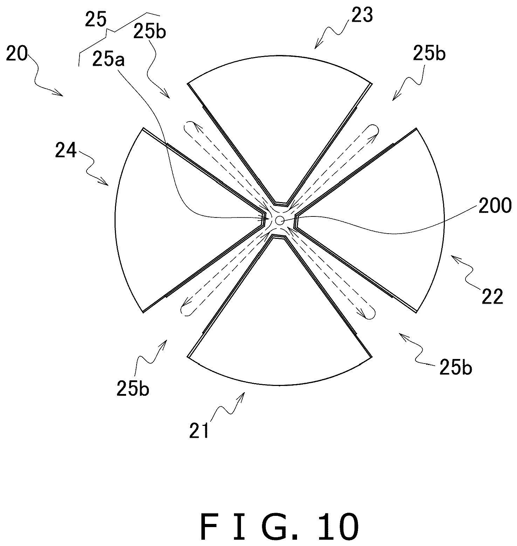

FIG. 10 is a plan view of the dispersion table 20 in which the moving path of the nozzle 200 is indicated by dashed-line arrows. Turning now to FIG. 10, the nozzle 200 passes through the space 25a of the introduction path 25 from above the dispersion table 20 to reach the underside of the dispersion table 20 and thereafter reciprocally moves along each of the spaces 25a in the radial direction.

### (5-3) Third Example Modification

In the above embodiment, the dispersion table 20 is divided into four, but it is not limited to being divided into four. When the dispersion table 20 is divided, it need only be divided into a plurality (two or more).

### (5-4) Fourth Example Modification

In the above embodiment, the introduction path 25 was described as including the space 25a and the four spaces 25b connected to it, but the introduction path 25 may also be a space such as a gap, a space such as a hole, a space such as a slit, or a combination of these. The introduction path 25 in the above embodiment can be said to be a combination of a hole and gaps since the space 25a corresponds to a hole and the spaces 25b correspond to gaps. Here, another example will be described with reference to the drawings. However, the introduction path is not limited to this as long as the nozzle can pass through it.

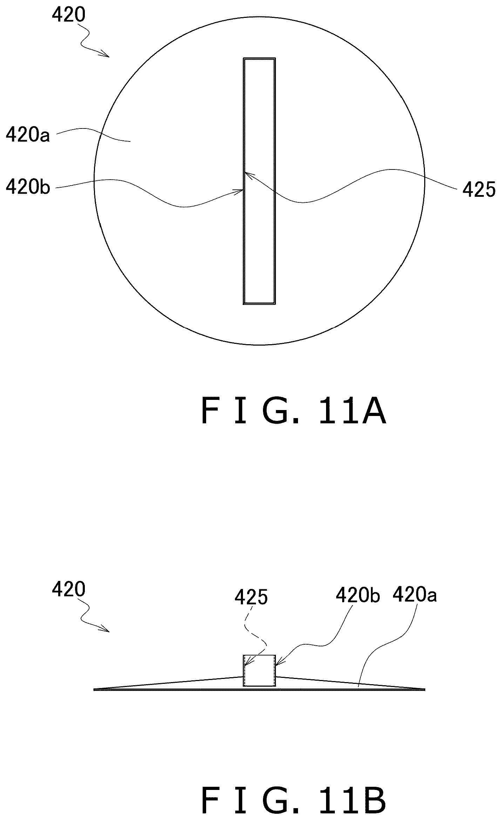

FIG. 11A is a plan view of a dispersion table 420 in which an introduction path 425 pertaining to another example is formed. Furthermore, FIG. 11B is a side view of the dispersion table 420 shown in FIG. 11A.

Turning now to FIG. 11A and FIG. 11B, the dispersion table 420 includes a conical table surface 420a and a rectangular cylinder wall 420b that projects in a vertical direction from the peripheral edge of a rectangular opening provided in the center of the table surface 420a. The inner peripheral surface of the rectangular cylinder wall 420b forms a passage that penetrates the dispersion table 420, and is utilized as the introduction path 425 through which the cleaning nozzle 200 can pass.

### (5-5) Fifth Example Modification

In the above embodiment, the nozzle 200 descends while spraying the cleaning liquid, passes through the space 25a, and reaches directly above the cover 35a, but the movement of the nozzle 20 may be stopped and the cleaning liquid may be sprayed before the nozzle 200 passes through the space 25a.

### REFERENCE SIGNS LIST

- 10: Dispersion Apparatus
- 20: Dispersion Table
- 21: First Dispersion Table (Region of Dispersion Table)
- 22: Second Dispersion Table (Region of Dispersion Table)
- 23: Third Dispersion Table (Region of Dispersion Table)
- 24: Fourth Dispersion Table (Region of Dispersion Table)
- 25: Introduction Path
- 25a: Space (Introduction Path)
- 25b: Spaces (Introduction Path)
- 30: Radial Feeders
- 40: Pool Hoppers
- 60: Weigh Hoppers (Hoppers)
- 70: Weight Detectors (Weighing Units)
- 35a: Cover
- 95: Control Unit
- 100: Combination Weighing Apparatus
- 200: Nozzle
- 420: Dispersion Table
- 425: Introduction Path
- G: Goods

### CITATION LIST

### <Patent Literature>

Patent Document 1: JP-A No. 2011-27438

## Claims

1. A dispersion apparatus comprising:
a dispersion table that disperses to the surrounding area goods supplied from outside;
a plurality of radial feeders that are radially disposed around the dispersion table and further convey in the radial direction the goods fed thereto from the dispersion table; and
a cover that is positioned under the dispersion table and covers drive units of each of the dispersion table and the plurality of radial feeders,
wherein an introduction path through which a nozzle that sprays a cleaning material can pass is formed in the dispersion table.

2. The dispersion apparatus according to claim 1, wherein the introduction path is configured so that the nozzle can pass through it from above the dispersion table to below the dispersion table.

3. The dispersion apparatus according to claim 1 or claim 2, wherein the introduction path is formed radially from a center portion of the dispersion table.

4. The dispersion apparatus according to claim 3, wherein the width of the introduction path becomes wider from the center portion to a peripheral edge portion of the dispersion table.

5. The dispersion apparatus according to any one of claim 1 to claim 4, wherein the dispersion table is divided by the introduction path into a plurality of regions.

6. The dispersion apparatus according to claim 5, wherein the plurality of regions are not in contact with each other.

7. The dispersion apparatus according to any one of claim 1 to claim 6, wherein the nozzle is movably provided.

8. A combination weighing apparatus comprising:
the dispersion apparatus according to any one of claim 1 to claim 6;
a plurality of hoppers that temporarily retain and then discharge the goods input from the radial feeders;
a plurality of weighing units that acquire as weigh values the masses of the goods retained in each of the plurality of hoppers; and
a control unit which, based on the weigh values acquired by each of the plurality of weighing units, selects a combination whose total value results in a target value and causes the goods to be discharged from the hoppers corresponding to the combination.

9. A combination weighing apparatus comprising:
the dispersion apparatus according to claim 7;
a plurality of hoppers that temporarily retain and then discharge the goods input from the radial feeders;
a plurality of weighing units that acquire as weigh values the masses of the goods retained in each of the plurality of hoppers; and
a control unit which, based on the weigh values acquired by each of the plurality of weighing units, selects a combination whose total value results in a target value and causes the goods to be discharged from the hoppers corresponding to the combination.
